# EUROPEAN PATENT APPLICATION

(11) **EP 1 874 067 A1**
(43) Date of publication of application: **02.01.2008**
(21) Application number: 06013526.6
(22) Date of filing: 29.06.2006
(51) Int. Cl.: H04Q 7/32

(54) **Method and apparatuses for transmitting information by means of far field and short range communication**

(71) Applicant: SIEMENS AKTIENGESELLSCHAFT, 80333 München (DE)
(72) Inventor: Fuchs, Nikolaus Dr., 3021 Pressbaum (AT); Hagl, Peter, 1120 Wien (AT); Swetina, Jörg Dr., 1060 Wien (AT)

(57) **Abstract**

The present invention relates to a method and apparatuses for transmitting information. More particularly, the present invention relates to a method and apparatuses for transmitting information comprising first and second information to and/or from a mobile terminal in environments where different wireless access technologies are available. In accordance with the inventive method, the first information is transmitted by means of far field communication to and/or from a base station of a first communications network, and the second information is transmitted by means of short range communication to and/or from a short range communication device which is communicatively coupled to a second communications network. The second communications network is communicatively coupled to the first communications network.

## Description

The present invention relates to a method and apparatuses for transmitting information. More particularly, the present invention relates to a method and apparatuses for transmitting information in environments where different wireless access technologies are available.

Today, countless wireless communication techniques exist allowing wireless and/or mobile voice and data communication among terminals or between terminals and a communications network. These wireless communication techniques can be generally categorized in far field communication and short range communication techniques. Short range communication is sometimes also referred to as near field communication.

Far field (wireless) communication techniques are typically designed for bridging distances of up to hundreds of kilometers. Examples include techniques such as GSM (Global System for Mobile Communications) and its railway variant GSM-R, UMTS (Universal Mobile Telecommunications System), WiMAX (Worldwide Interoperability for Microwave Access), satellite communications, WLAN (Wireless LAN), and TETRA (Terrestrial Trunked Radio). Other well known far field techniques are Flash OFDM, CDMA, UTRAN, GERAN, RAN, HSDPA, HSCSD, and GPRS.

By contrast, short range (wireless) communication techniques are typically designed for bridging short distances ranging from contact or near-contact (less than 1 centimeter) up to 10-50 meters. Examples include NFC (Near Field Communication), RFID (Radio Frequency Identification), IrDA (infrared interface defined by the Infrared Data Association), ZigBee, and Bluetooth.

A number of wireless devices are commercially available that comprise transceivers for both communication techniques such as GSM or UMTS mobile phones having a Bluetooth interface. Disadvantageously, the duality of wireless interfaces in such mobile phones is presently only used to replace wires that were previously needed to attach a headset or to connect the mobile phone to other devices such as personal computers.

It is therefore an object of the present invention to provide a novel method and apparatuses for advanced communications better utilizing said duality of wireless interfaces.

In accordance with the foregoing objects, there is provided by the invention a method for transmitting information comprising first and second information to and/or from a mobile terminal. In accordance with the inventive method, the first information is transmitted by means of far field communication to and/or from a base station of a first communications network, and the second information is transmitted by means of short range communication to and/or from a short range communication device which is communicatively coupled to a second communications network. The second communications network is communicatively coupled to the first communications network.

By this method, communication may for example be initiated using the far field communication techniques, in particular the security and authentication methods implemented therein, and commenced using the short range communication techniques in order to save costly bandwidth on the far field communication channels and to exploit local vicinity. In an embodiment, encryption keys needed for secure communication between two mobile terminals are exchanged using the far field communication techniques and then used for securing the information exchange over the short range communication path.

Also, communication between the first network and the (first) mobile terminal may be resumed using short range communication if the far field communication becomes (temporarily) unavailable, for example indoors, in tunnels, etc., by means of a short range communication device still having connectivity to the first network (either directly or via a second network). Such short range communication device may in turn be a (second) mobile terminal such as a mobile phone having connectivity either by UMTS, GSM, ..., or by means of short range communications to yet another short range communication device. The second mobile terminal would then act as a relay for the first mobile terminal.

In accordance with the invention, there is also provided a mobile terminal, comprising:
- a first transceiver for connecting to a first communications network by means of far field communication;
- a second transceiver for connecting, by means of short range communication, to a short range communication device communicatively coupled to a second communications network, the second communications network communicatively coupled to the first communications network; and
- means for performing the inventive method.

In accordance with the invention, there is further provided a network arrangement comprising:
- a first communications network comprising a base station for transmitting first information to and/or from a mobile station by means of far field communication;
- a second communications network communicatively coupled to the first communications network, the second communications network communicatively coupled to a short range communication device comprising a transmitter and/or receiver for transmitting second information to and/or from a mobile station by means of short range communication; and
- means for performing the inventive method.

Embodiments of the invention will now be described in more detail with reference to drawings, wherein:
Fig. 1 depicts a generic embodiment of the present invention; and
Fig. 2 schematically shows the application of the present invention to mobile payment.

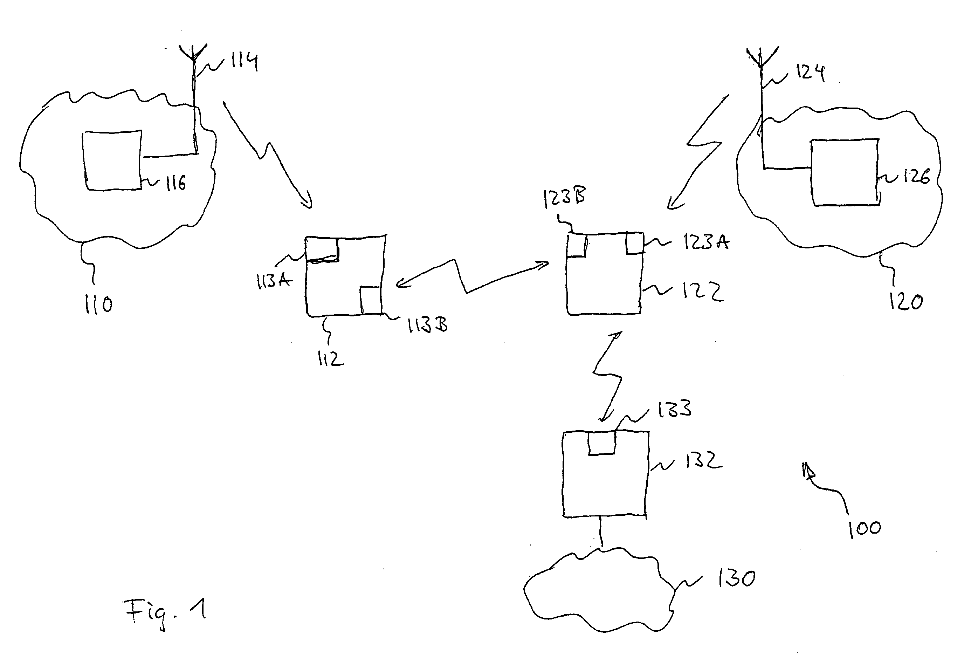

In Fig. 1, there is schematically shown a first mobile terminal 112 being served by a first base station 116 of a first network 110 by means of a first antenna 114, using any far field communication technique such as GSM, UMTS, WLAN, or WiMAX. First terminal 112 comprises a first transceiver 113A and a corresponding antenna (not shown) for connecting to first network 110 by means of far field communication. First terminal 112 also comprises a second transceiver 113B and a corresponding antenna (not shown) for communicating using any short range communication technique such as Bluetooth, NFC, or RFID.

A second mobile terminal 122 shown in Fig. 1 is being served by a second base station 126 of a second network 120 by means of a second antenna 124, using any far field communication technique such as GSM, UMTS, WLAN or WiMAX. Note that the far field communication technique may in embodiments be different from that used by first base station and antenna 114, 116. In other embodiments, both mobile terminals 112, 122 are connected to the same network, for example first network 110, using the same or different far field communication techniques.

Second terminal 122 comprises a first transceiver 123A and a corresponding antenna (not shown) for connecting to second network 120 by means of far field communication. Second terminal 122 also comprises a second transceiver 123B and a corresponding antenna (not shown) for communicating using any short range communication technique such as Bluetooth, NFC, or RFID.

First and second terminals 112, 122 may for example be mobile phones, portable or mobile computers, personal digital assistants, etc., or any combination thereof.

Fig. 1 also shows a third terminal, or short range communication device 132 connected to a third network 130. Third terminal 132 may be portable or stationary. Third terminal 132 comprises a transceiver 133 and a corresponding antenna (not shown) for communicating using any short range communication technique such as Bluetooth or NFC.

Networks 110, 120, and 130 may be interconnected using wireline or wireless connections (not shown).

In operation, the network arrangement depicted in Fig. 1 may be used to establish secure and authenticated communication between mobile terminals 112, 122. To that end, encryption key sets are generated in networks 110 and 120 that allow encryption and decryption of data. First network 110 provides a first key or key set to first mobile terminal 112 using far field communication, and second network 120 provides a corresponding second key or key set to second mobile terminal 122, also using far field communication. The first and second keys or key sets are then used for secure short range communication between mobile terminals 112, 122.

Thereby direct secure, short range communication between mobile terminals 112, 122 is facilitated that does not require the use of expensive far field communication channels, while the well established and trusted authentication and/or authorization methods of the far field communication networks 110, 120 are utilized for securing the communication. Interception of the short range communication and password espionage are thus made much more difficult.

Of course, further terminals, mobile or stationary, such as third terminal 132, may likewise be included in the communication.

The present invention may also be utilized to allow first mobile terminal 112 to receive payload data from second network 120 trough second mobile device 122, which then acts as a relay. Assuming for example that first mobile terminal 112 comprises a GSM transceiver 113A (e.g., a GSM modem card in a portable computer), the bandwidth available for first mobile terminal 112 is quite limited. Second mobile terminal 122 on the other hand may be connected to a high-bandwidth far field network 120 such as a WLAN or WiMAX network. Then, once first mobile terminal 112 is properly authenticated and/or authorized using the corresponding methods of first network 110, first mobile terminal may use short range communication to transmit and/or receive data from second mobile device 122, which in turn receives and/or transmits this data from second network 120, which in turn is connected to first network 110. For example, networks 110 and 120 may be different access networks of a unique telecommunications provider.

Instead of being connected by means of far field communication to second network 120, second mobile terminal 122 may alternatively be connectively coupled by short range communication to third terminal 132, which is connected to third network 130. Such an arrangement may be useful if first terminal 112 is out of range for direct short range communication with third terminal 132.

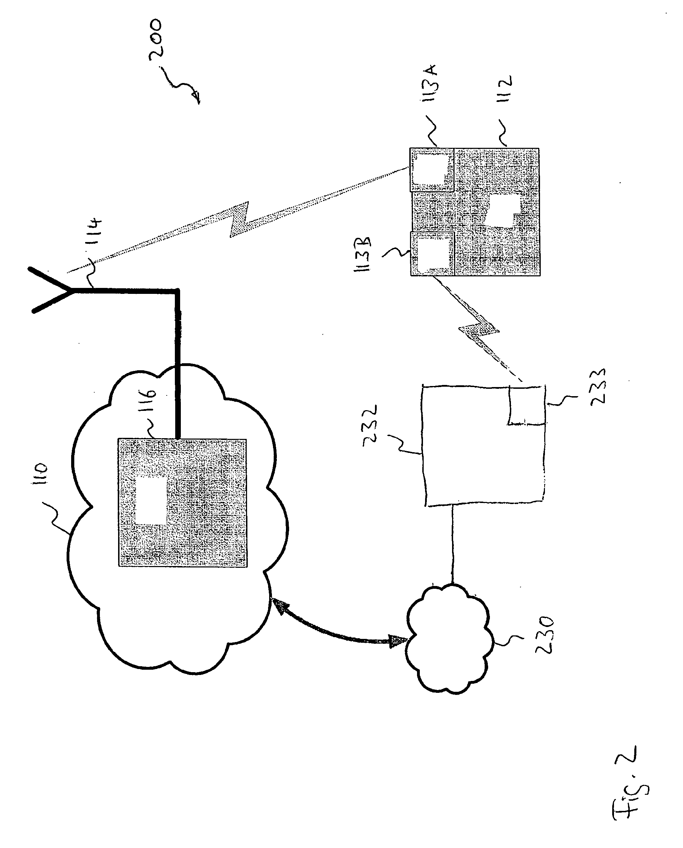

The present invention may for example be used in connection with mobile payment, as explained in the following with reference to Fig. 2. In Fig. 2, there is again shown mobile terminal 112 being served by first base station 116 of first network 110 by means of first antenna 114, using any far field communication technique such as GSM, UMTS, WLAN, or WiMAX.

Fig. 1 also shows a second terminal, or short range communication device 232 connected to a second network 230. Short range communication device 232 may be portable or stationary. Second terminal 232 comprises a transceiver 233 and a corresponding antenna (not shown) for communicating using any short range communication technique such as Bluetooth, NFC, or RFID.

Networks 110 and 230 are schematically shown to be interconnected using wireline or wireless connections.

Operation of payment system 200 of Fig. 2 is given as follows: A user approaches payment terminal 233, for example a cash register equipped with any short range communication technique compatible to the user's mobile phone 112. As the user's mobile phone 112 comes into range of payment terminal 233 (which may be near-contact or up to 10 cm for NFC), the user will be prompted on his/her mobile phone 112 whether he/she would like to make a payment. Upon acknowledgement by the user, during which the user may have to (re)enter some credentials at the mobile phone in order to prevent users of stolen or lost phones from making payments in the mobile phone proprietor's name, the authorization and/or trusting process over the far field communication may be initialized by sending the mobile phone's credentials across the short range communication to the cash register 233. These credentials may be accompanied by information how the user's payment and/or network provider may be reached. Additionally, user preferences such as language may be transferred.

Both the mobile phone 112 and the payment terminal 233 will independently receive information through the corresponding far field channels and networks, allowing the mobile phone 112 to verify the credentials and identity of the payment terminal 233 and vice versa, in embodiments including also encryption key for encrypting future communication between mobile phone 112 and payment terminal 233. The far field communication to mobile phone 112 is then no longer needed and may be released. The payment terminal 233 will now present further information such as a personalized welcome, the user's balance, the amount due, information on returns and/or refunds, vouchers, etc.

In another embodiment, the payment terminal 233 may be replaced by an Automated Teller Machine (ATM). Such ATM may then no longer require a ATM card slot nor a display, making it easier to design and more fraud and vandalism proof.

While the present invention has been described by reference to specific embodiments and specific uses, it should be understood that other configurations and arrangements could be constructed, and different uses could be made, without departing from the scope of the invention as set forth in the following claims.

## Claims

1. A method for transmitting information comprising first and second information to and/or from a mobile terminal (112), wherein the first information is transmitted by means of far field communication to and/or from a base station (116) of a first communications network (110) and the second information is transmitted by means of short range communication to and/or from a short range communication device (122) communicatively coupled to a second communications network (120, 130), the second communications network (120) communicatively coupled to the first communications network (110).

2. The method of claim 1, wherein user authentication and/or authorization of the mobile terminal (112) is effected within the first information transmitted using far field communication.

3. The method of claim 2, wherein after user authentication and/or authorization communication to and/or from the mobile terminal (112) is effected solely within the second information transmitted using short range communication.

4. The method of claim 3, wherein the communication to and/or from the mobile terminal (112) effected solely within the second information transmitted using short range communication relates to mobile payment.

5. The method of any of the preceding claims, wherein the information transmission to and/or from the mobile terminal is initialized when the mobile terminal (112) enters a communication range of the short range communication device (122).

6. The method of any of the preceding claims, wherein an encryption key or an encryption key set for encrypting the mobile terminal's short range communication is provided within the first information.

7. The method of any of the preceding claims, wherein the short range communication device (122) is communicatively coupled to the second communications network (120, 130) by means of at least one additional short range communication device (132), wherein the communication between the short range communication devices (122, 132) is effected by means of short range communication.

8. The method of any of the preceding claims, wherein the far field communication is effected in accordance with any of the following method: UMTS, WiMAX, WLAN, GSM, Flash OFDM, CDMA, UTRAN, GERAN, RAN, HSDPA, HSCSD, or GPRS.

9. The method of any of the preceding claims, wherein the short range communication is effected in accordance with any of the following method: Near Field Communication NFC, Radio Frequency Identification RFID, ZigBee, or Bluetooth.

10. The method of any of the preceding claims, wherein the second communications network (120) and the first communications network (110) form a unique communications network and wherein the short range communication device (122) is communicatively coupled to the unique communications network.

11. A mobile terminal (112), comprising:
- a first transceiver (113A) for connecting to a first communications network (110) by means of far field communication;
- a second transceiver (113B) for connecting, by means of short range communication, to a short range communication device (122) communicatively coupled to a second communications network (120), the second communications network (120) communicatively coupled to the first communications network (110); and
- means for performing the method of any of claims 1 through 10.

12. A network arrangement (100) comprising:
- a first communications network (110) comprising a base station (116) for transmitting first information to and/or from a mobile station (112) by means of far field communication;
- a second communications network (120) communicatively coupled to the first communications network (110), the second communications network (120) communicatively coupled to a short range communication device (122) comprising a transmitter and/or receiver (123B) for transmitting second information to and/or from the mobile station (112) by means of short range communication; and
- means for performing the method of any of claims through 10.
